# EUROPÄISCHE PATENTSCHRIFT

(11) **EP 3 585 595 B1**
(45) Veröffentlichungstag und Bekanntmachung des Hinweises auf die Patenterteilung: **07.06.2023**
(21) Anmeldenummer: 18706720.2
(22) Anmeldetag: 20.02.2018
(51) Int. Cl.: B29C 65/20, B29C 65/14, B29C 65/52, B29C 65/78, B29C 65/06, B29L 31/10

(54) **VERFAHREN UND VORRICHTUNG ZUM FÜGEN MEHRERER WERKSTOFFPLATTEN**
METHOD AND DEVICE FOR JOINING A NUMBER OF MATERIAL BOARDS
PROCÉDÉ ET DISPOSITIF D'ASSEMBLAGE DE PLUSIEURS PLAQUES DE MATÉRIAU

(30) Priorität: 22.02.2017 DE 102017202894
(43) Veröffentlichungstag der Anmeldung: 01.01.2020
(73) Patentinhaber: Robert Bürkle GmbH, 72250 Freudenstadt (DE)
(72) Erfinder: RICKEL, Kurt, 61191 Rosbach vor der Höhe (DE); SASSMANNSHAUSEN, Jan, 33397 Rietberg (DE); MANCE, Oliver, 59329 Wadersloh (DE); KOCH, Thorsten, 32120 Hiddenhausen (DE)
(74) Vertreter: RPK Patentanwälte Reinhardt und Kaufmann Partnerschaft mbB
(86) Internationale Anmeldenummer: PCT/EP2018/054176
(87) Internationale Veröffentlichungsnummer: WO 2018/153873

(56) Entgegenhaltungen:
- WO-A1-92/01396
- WO-A1-2015/048865
- DD-A1- 231 543
- DE-A1- 3 831 612
- SU-A1- 1 558 696
- US-A- 3 897 296
- US-A- 5 853 529

## Beschreibung

Die vorliegende Erfindung betrifft ein Verfahren zum Fügen mehrerer Werkstoffplatten nach dem Oberbegriff des Anspruches 1 sowie eine Vorrichtung zum Fügen mehrerer Werkstoffplatten nach dem Oberbegriff des Anspruches 9.

Unter einem "Fügen" wird dabei ein Fügen beliebiger Oberflächen von Werkstoffplatten, wie insbesondere Dämmstoffplatten aber auch anderer Werkstoffplatten verstanden, wobei zur Erhöhung der Breite die Längskanten, zur Erhöhung der Länge die Querkanten und zur Steigerung der Dicke bzw. Höhe die Flächen selbst miteinander gefügt werden können. Als Fügeverfahren eignen sich grundsätzlich Schweißen mit kontaktierender Wärmeeinleitung durch Wärmeleitung, Konvektion, Strahlung oder Reibung bzw. Löten, Kleben oder ein Verbinden mit anderen Zusatzstoffen. Das Fügeverfahren kann dabei kontinuierlich mit kontinuierlicher Zuführung der Werkstoffplatten als auch intermittierend in einem diskontinuierlichen Verfahren erfolgen.

Unter "Werkstoffplatten" werden Platten aus Werkstoffen aller Art verstanden, wobei es sich vorzugsweise um geschäumte und nicht geschäumte Dämmstoffplatten handeln kann. Eine Verwendung ist aber ebenso für Spanplatten oder Platten in der Photovoltaik möglich. Dabei können beim Fügen sowohl artgleiche als auch artungleiche Platten gefügt werden. Je nach Art der Werkstoffplatten muss das Fügeverfahren entsprechend ausgewählt werden, das heißt eine Vorbereitung der zu fügenden Oberflächen kann durch Wärmeeintrag oder auch durch geeignete Verbindungsmittel, wie Klebstoff, Leim oder andere Zusatzstoffe, die auf die zu fügenden Oberflächen aufgetragen werden, erreicht werden.

Unter den zu fügenden "Oberflächen" werden die Oberflächen der Werkstoffplatten verstanden, das heißt Längskanten und Querkanten sowie die demgegenüber größeren Flächen der Platten, wobei diese Flächen nicht flach in einer Ebene liegen müssen, sondern ebenso gekrümmt oder dreidimensional geformt sein können. Grundsätzlich handelt es sich bei den zu fügenden Flächen um ein Fügen einer Längskante und/oder Querkante einer ersten Werkstoffplatte mit den entsprechenden Oberflächen einer weiteren Werkstoffplatte. Denkbar sind damit nicht nur ein Fügen von Kante an Kante, sondern zum Beispiel auch die Erstellung von Winkelstößen, bei denen Kante auf Fläche stößt, also zum Beispiel ein L-Stück oder andere Geometrien hergestellt werden.

Unter einer "Relativbewegung" zwischen einer Flächenvorbereitungseinheit und wenigstens einer der zu fügenden Oberflächen der Werkstoffplatten wird verstanden, dass die zu fügende(n) Oberfläche(n) relativ zur Flächenvorbereitungseinheit bewegt bzw. bewegen. Durch die Relativbewegung soll sichergestellt werden, dass die zu fügende Oberfläche beim Überstreichen mit der Flächenvorbereitungseinheit für den anschließenden Fügeprozess vorbereitet wird.

Das Hauptanwendungsgebiet der vorliegenden Erfindung, auf das die Erfindung jedoch nicht beschränkt ist, ist das Fügen von Werkstoffplatten und insbesondere von Dämmstoffplatten. Derartige Werkstoff- und Dämmstoffplatten werden vor allem im Bau- und Immobilienbereich sowie in der Industrie verwendet. Als Dämmstoffplatten werden aufgrund geltender Energiesparverordnung derartige Platten zur Erzielung einer ausreichenden Wärmedämmung eingesetzt, um nicht erneuerbare Energieträger einzusparen. Durch eine optimale Wärmedämmung können die Heizkosten eines Hauses deutlich verringert werden. Aus diesem Grund fanden in der Vergangenheit Kunststoffschaumelemente als Dämmstoffplatten mit besonders starken Dicken von mehr als 100 mm Einsatz bei der Gebäudeisolierung. Verwendet wurden zu diesem Zweck vor allem Dämmmittel, wie beispielsweise Polyurethan-Hartschaum, expandierter Polystyrol-Hartschaum oder extrudierter Polystyrol-Hartschaum. Auch Werkstoffplatten für andere Einsatzfälle aus diesen Materialien oder auch aus anderen Materialien sind bekannt.

Gleich welche Werkstoffplatten verwendet werden, sind diese üblicherweise prozessbedingt und in Breite und Höhe zum Beispiel meist limitiert auf 600 bis 1200 mm Breite und breitenabhängig üblicherweise maximal 100 - 240 mm Höhe. Grundsätzlich sind jedoch auch andere Breiten und Höhen denkbar.

Bei geschäumten Werkstoffplatten haben sich nach Abkehr von den in der Vergangenheit zum Aufschäumen der Werkstoffplatten verwendeten FCKW-haltigen Treibmitteln bei der Herstellung derartiger Platten jedoch Schwierigkeiten eingestellt. Diese Schwierigkeiten nehmen spätestens ab einer Dicke der Werkstoffplatten von mehr als 80 mm deutlich zu. Gleichzeitig verschlechtern sich die Isoliereigenschaften und der Lambdawert (Wärmeleitwiderstand) bei Werkstoffplatten mit einer Dicke von mehr als 80 mm, da sich die Zellstruktur des Schaums verändert.

Aus der dem Oberbegriff des Anspruches 1 und 9 zugrundeliegenden US 5,853,529 A sind ein Verfahren und eine Vorrichtung zum Fügen mehrerer Werkstoffplatten mit mehreren Oberflächen bekannt, wobei die Oberflächen der Werkstoffplatten durch mehrere aneinander grenzende Längskanten, Querkanten und Flächen gebildet sind. Die Flächen grenzen an die Längskanten und Querkanten an und sind gegenüber den Längskanten und Querkanten großflächiger. In einer Fügestation ist eine zu fügende Oberfläche einer ersten Werkstoffplatte mit wenigstens einer Oberfläche wenigstens einer weiteren Werkstoffplatte zueinander passgenau positionierbar und fügbar. Eine stationäre Flächenvorbereitungseinheit ist zum Vorbereiten wenigstens einer der relativ dazu beweglichen, zu fügenden Oberflächen vorgesehen. Mit einem Heizschwert beaufschlagt die Flächenvorbereitungseinheit wenigstens eine der Werkstoffplatten mit Wärme und schmilzt sie an, um sie zum Fügen vorzubereiten. Die Werkstoffplatten werden durch Anpressmittel gegen ein Führungsschwert gedrückt. Dabei wird die Flächenvorbereitungseinheit in einem stumpfen bis rechten Winkel zur Fläche wenigstens einer Werkstoffplatte relativ zu den zu fügenden Oberflächen geführt.

Aus der DE 10 2012 204 822 A1 ist ein Verfahren zum Fügen von Werkstoffplatten aus aufgeschäumten Materialien bekannt. Die Werkstoffplatten werden mit je einer Fördereinrichtung in der gewünschten Orientierung und Deckung passgenau übereinander positioniert einer Fügestation zugeführt und dort entlang eines Trennschwertes bewegt. Durch die Positionierung des Trennschwertes wird ein Spalt mit definierter Spaltbreite erzeugt, in dem ein stromabwärts vom Trennschwert angeordnetes, fest installiertes Wärmeelement, vorzugsweise ein Heizschwert, angeordnet ist. Dieses Heizschwert erweicht durch berührungsfreie Wärmeübertragung mindestens eine der Oberflächen der zu fügenden Werkstoffplatten oder schmilzt sie an. Anschließend werden die Werkstoffplatten durch Andrückelemente zusammengefügt, die die Werkstoffplatten so gegeneinander drücken, dass sich aufgrund der vorangegangenen Wärmebeaufschlagung beim Andrücken und anschließenden Abkühlen der Schweißnaht eine stoffschlüssige Verbindung einstellt. Damit können auch mehrlagige Hartschaumplatten hergestellt oder Hartschaumplatten kaschiert werden. Ein Fügen erfolgt nicht unter Einbindung der Kanten wenigstens einer Werkstoffplatte.

Aus der WO 2016/102292 A1 ist ein Verfahren zur Herstellung von zumindest zweilagigen thermoplastischen Platten durch thermisches Verschweißen von Platten bekannt, wobei die Platten eine unterschiedliche Dichte aufweisen. Dabei werden mehrere Heizelemente auf zueinander versetzten Ebenen zwischen die Ausgangsplatten eingeführt, ohne dass die Oberflächen der Heizelemente die Werkstoffplatten berühren. Durch entsprechend gewählte Abstände können unterschiedliche Energiemengen bzw. Heizleistungen auf die miteinander zu verbindenden Oberflächen der Ausgangsplatten übertragen werden, die anschließend miteinander verbunden werden.

Aus der EP 2 724 843 A1 ist es bekannt, extrudierte Schaumstoffplatten großer Dicke durch Verschweißen mehrerer Ausgangsplatten herzustellen, wobei die Schweißnaht durch eine kurzfristige Schockerwärmung so dünn gehalten wird, dass die Wasserdampfdiffusionswiderstandszahl gegenüber den Ausgangsplatten möglichst wenig erhöht wird und eine gewünschte Diffusionsoffenheit zu erreichen ist. Für die Erwärmung wird ein Heizschwert oder ein Heizkeil als Wärmequelle verwendet, das oder der zumindest teilweise mit den Berührungsflächen der Ausgangsplatten in Berührung kommt.

Herkömmlicherweise erfolgt das Fügen mehrerer Werkstoffplatten taktweise im Spiegelschweißverfahren, wobei die zu verbindenden Oberflächen der beiden Werkstoffplatten vollflächig durch flächige Wärmequellen bis zum Anschmelzen aufgeheizt werden. Danach werden die Spiegel herausgefahren und die beiden Werkstoffplatten passgenau aufeinander gelegt und anschließend gegeneinander gedrückt, bis die angeschmolzenen Oberflächen der Werkstoffplatten erkaltet sind und hierdurch eine stoffschlüssige Verbindung der beiden Werkstoffplatten entsteht. Bedarfsweise können dann noch weitere Platten aufgebracht werden, um die Plattendicke weiter zu erhöhen. Die Spiegel stehen üblicherweise in einem geringem Abstand von z.B. 0,3 mm zu den Werkstoffplatten, so dass letztere sehr exakt zugeführt werden müssen. Durch die Bewegung der Spiegel besteht auch die Gefahr, dass die angeschmolzenen Oberflächen unterschiedlich schnell abkühlen. Das Spiegelschweißverfahren hat den Nachteil, dass nur eine geringe Plattenleistung/min. und ein hoher Energieeinsatz erforderlich ist, da mit jeder Bewegung, die zwischen den Platten zum Anschmelzen aufgebrachte Wärme wieder abgeführt wird.

Den genannten Verfahren ist gemeinsam, dass einerseits eine Begrenzung der Geometrie dadurch vorgegeben ist, dass die Extrusionsbreite und/oder die Extrusionsdicke limitiert sind. Zudem ist eine Umstellbarkeit eines Extruders für eine auftragsbezogene Produktion mit hohem Ausschuss und Aufwand verbunden, bis der Prozess stabil und reproduzierbar läuft. Optimale Lambda-Werte werden bis zu einer Dicke von ca. 80 mm erreicht, danach verschlechtern sich die Werte in den Einzelplatten mit zunehmender Dicke.

Dämmstoffplatten werden zum Beispiel auch im Verlegeverfahren mit Nut und Feder zum Erzeugen von Stößen gefügt und dadurch Flächen erzeugt. Dies erhöht den Abfall bei der Herstellung und verringert die Durchlaufzeit je Werkstoffplatte. Zudem sind spezielle Werkzeuge und separate Anlagenkomponenten erforderlich. Eine stoffschlüssige Verbindung ohne Zusatzstoffe ist bei derartigen Systemen nicht zu erreichen. Zudem sind die Vorrichtungen nur stationär und nicht mobil einsetzbar. Gleiches gilt für Stufenfalzsysteme.

Ist es erforderlich, stumpfe Verbindungen an Stößen zu erzeugen, ist meist ein Zusatzstoff wie Klebstoff erforderlich. Üblicherweise wird in der Industrie hierfür separates Hilfsmaterial verwendet, z.B. die Verwendung von zusätzlichen Hilfsprofilen. Ohne Zusatzstoff ist keine ausreichende Stabilität erreichbar, was umgekehrt gleichbedeutend damit ist, dass keine sortenreine Verbindung möglich ist.

Sollen Platten passgenau zugeschnitten werden, was zum Beispiel erforderlich ist, um Winkel oder Abwicklungen zu erzeugen, entsteht ein zusätzlicher Abfall bei der Herstellung und spezielle Werkzeuge und separate Anlagenkomponenten werden erforderlich. Ohne Zusatzstoffe sind auch derartige Verbindungen nicht zu verwirklichen. Das heißt, es ergeben sich keine stoffschlüssigen Verbindungen. Dies führt zusätzlich zu einem Lageraufbau, um die erforderlichen Varianten vorhalten zu können. Beim Anwender führt dies insbesondere bei Dämmstoffplatten zu Kältebrücken, Verlust an Stabilität oder zu einer Verschlechterung der Oberflächenanmutung.

Die Vielfalt der erforderlichen Formen und Größen an Werkstoffplatten führt zu Ausschuss, Abfall und zusätzlichem Aufwand. Es ergeben sich Stillstandzeiten der (Extrusions-)Anlagen, zum Beispiel bei einem Düsenwechsel und es müssen variable Anlagenkomponenten regelmäßig zur Verfügung stehen, die auf die jeweils herzustellenden Werkstoffplatten abgestimmt sind. Dies bedeutet einen zusätzlichen anlagetechnischen Aufwand. Bei jedem neuen Anfahren entsteht zudem ein Anfahrausschuss. Bedenkt man ferner, dass unter all diesen Randbedingungen die prozessmäßig erreichbaren Geometrien begrenzt sind, besteht ein Bedürfnis nach einer Alternativmöglichkeit, Werkstoffplatten zu fügen. Dabei wird noch nicht berücksichtigt, dass die möglichen Plattenbreiten zudem aufgrund des anschließenden Transports zumindest auf Containermaß begrenzt sind.

Ausgehend von diesem Stand der Technik liegt der vorliegenden Erfindung die Aufgabe zugrunde, ein Verfahren und eine Vorrichtung zum Fügen mehrerer Werkstoffplatten zu schaffen, die die Herstellung qualitativ hochwertiger Werkstoffplatten variabel und schnell bei gleichzeitig energieeffizienten Prozess erlauben.

Diese Aufgabe wird durch ein Verfahren und eine Vorrichtung zum Fügen mehrerer Werkstoffplatten mit den Merkmalen des Anspruches 1 bzw. 9 gelöst. Vorteilhafte Weiterbildungen sind Gegenstand der abhängigen Unteransprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Das Verfahren und die Vorrichtung zum Fügen mehrerer Werkstoffplatten gestatten ein Fügen von Werkstoffplatten an den Längs- bzw. Querkanten der Platten als auch von Längs- bzw. Querkanten mit den Flächen der Werkstoffplatten. Dabei können zur Erhöhung der Breite die Längskanten, zur Erhöhung der Länge die Querkanten und gegebenenfalls zur Steigerung der Dicke auch die Flächen der Werkstoffplatten miteinander gefügt werden. Durch die Relativbewegung einer Flächenvorbereitungseinheit und/oder wenigstens einer der zu fügenden Oberflächen der Werkstoffplatten erfolgt mittels der Flächenvorbereitungseinheit eine Vorbereitung wenigstens einer oder beider der zu fügenden Oberflächen während der Relativbewegung. Anschließend werden die zu fügenden Oberflächen mit Anpressdruck stoffschlüssig oder kraftschlüssig miteinander verbunden.

Die Flächenvorbereitungseinheit wird dabei in einem Winkel von mehr als 45° zur Fläche wenigstens einer Werkstoffplatte geführt, das heißt, sie wird quer durch die Längserstreckung oder Quererstreckung der Platte geführt. Dabei werden die zu fügenden Oberflächen für die anschließende stoffschlüssige oder kraftschlüssige Verbindung vorbereitet. Möglich wird dies vorzugsweise durch einen angetriebenen Seitenanschlag einer Positioniereinrichtung, mit der die durch die Flächenvorbereitungseinheit vorbereiteten Oberflächen aneinander gepresst werden können. Damit ist es möglich, verschiedenste Kanten aneinanderzufügen oder auch eine Kante an eine Fläche zu fügen, um zum Beispiel ein L-Profil zu erstellen. Aus Standardelementen (Halbzeugen) können damit beliebig lange und/oder breite Werkstoffplatten erzeugt bzw. hergestellt werden. Da weitestgehend mit Standardgrößen gearbeitet werden kann, lässt sich auch die Durchsatzleistung der Herstellungsanlagen für die Werkstoffplatten steigern. Erfindungsgemäß kann daher mit einem kleinen Lager an Werkstoffplatten auch kurzfristig ein großes Geometriespektrum abgedeckt werden. Trotz der hierfür erforderlichen verringerten Lagerkapazität ist ein hohes Maß an Flexibilität möglich, da schnell beliebige Breiten und Längen von Werkstoffplatten oder auch andere Geometrien an Werkstoffplatten wie zum Beispiel Winkelstöße erzeugt werden können. Durch die exakte Positionierung und Vorbereitung der Werkstoffplatten ergibt sich eine hohe Reproduzierbarkeit und damit Qualität und Produktivität der Anlage als auch der so hergestellten Werkstoffplatten. Dies geht einher mit einer Reduzierung der Variantenvielfalt im Lager, da nur noch Standardelemente und -größen benötigt werden bzw. vorgehalten werden müssen.

Dabei ist die Flächenvorbereitungseinheit normal zur Fläche der wenigstens einen Werkstoffplatte in einem Fügespalt geführt. Mit anderen Worten ist die Flächenvorbereitungseinheit z.B. stehend und stationär angeordnet, während die miteinander zu fügenden Werkstoffplatten zum Beispiel auf beiden Seiten an der Flächenvorbereitungseinheit vorangeführt werden. Die Vorschubgeschwindigkeit bestimmt dabei die Verweildauer an der Flächenvorbereitungseinheit und damit auch z.B. den Grad des Aufschmelzens oder die Menge des Auftrags an Verbindungsmittel.

Dabei beaufschlagt die Flächenvorbereitungseinheit wenigstens eine der Werkstoffplatten, vorzugsweise beide mit Wärme und schmilzt dabei die zu fügenden Oberflächen an. Die angeschmolzenen Oberflächen können anschließend gefügt werden. Der Wärmeeintrag erfolgt kontaktierend, wobei vorzugsweise darauf geachtet wird, dass ein Aufschmelzen der zu fügenden Oberflächen nur in dem Umfang erfolgt, wie es zum anschließenden Fügen erforderlich ist. Dadurch kann auch auf die "Schweißnaht" so Einfluss genommen werden, dass ein guter Lambdawert des Endproduktes erhalten bleibt. Es kann damit in einem optimierten Temperaturbereich bearbeitet werden, wodurch die Schweißnaht sehr dünn gehalten wird, was unter anderem zur Diffusionsoffenheit der hergestellten Endprodukte beiträgt. Da das Anschmelzen unmittelbar vor dem Fügeprozess erfolgt, kann der Prozess mit verhältnismäßig wenig Energie betrieben werden.

Die Werkstoffplatten werden in einer Fügestation zueinander passgenau positioniert oder können positioniert werden und werden dann in der Fügestation unter sensorischer Überwachung des Anpressdrucks verbunden. Durch das exakte Positionieren werden Ausschuss und Nachbearbeitung deutlich verringert. Gleichzeitig wird durch die sensorische Überwachung des Anpressdrucks sichergestellt, dass es nicht zu Beschädigungen der Werkstoffplatten kommt und andererseits die Fügestelle stoffschlüssig und einstückig in ihrem Erscheinungsbild ist.

In einer bevorzugten Ausführungsform ist die Flächenvorbereitungseinheit parallel zu den zu fügenden Oberflächen in dem Fügespalt geführt oder in den Fügespalt einführbar. Durch die Längserstreckung entlang des Fügespalts kann die Einwirkdauer auf die Werkstoffplatten vorteilhaft beeinflusst werden.

In einer alternativen Ausführungsform kann die Flächenvorbereitungseinheit auch als Auftragseinheit für ein Verbindungsmittel zum Verbinden der Oberflächen ausgebildet sein, die das Verbindungsmittel auf die zu fügenden Oberflächen aufträgt. Als Verbindungsmittel kann zum Beispiel Leim, Klebstoff oder ein sonstiger Zusatzstoff aufgetragen werden, wobei auch in diesem Fall die so vorbereiteten Werkstoffkanten bzw. Werkstoffflächen anschließend unter Anpressdruck aneinander gefügt werden. Der Auftrag von derartigen Verbindungsmitteln ist vor allem dann angebracht, wenn die Werkstoffplatten nicht durch Aufschmelzen gefügt werden können oder ein Aufschmelzen nicht erfolgen soll oder kann. Gleichwohl ist ein exaktes Positionieren und Zurichten der Werkstoffplatten durch geeignete Anordnung der Flächenvorbereitungseinheit möglich.

Besonders bevorzugt können die Werkstoffplatten auch unter Ausbildung von Winkelstößen miteinander gefügt werden. Erfolgt eine entsprechende Zuführung der Werkstoffplatten können die miteinander zu verbindenden Kanten, Flächen oder auch Kantenbereiche und Flächenbereiche durch die Flächenvorbereitungseinheit so vorbereitet werden, dass beliebige Geometrien möglich werden. Der Anwender muss nicht mehr vor Ort die entsprechenden Stöße bilden, sondern es können vorgefertigte Teile an Stelle der heute vielfach verwendeten Stoßschienen eingesetzt werden.

Während des Fügens werden die Werkstoffplatten vorzugsweise an von den zu fügenden Oberflächen verschiedenen Oberflächen der Werkstoffplatten geführt und positioniert, besonders vorzugsweise an den den zu fügenden Oberflächen gegenüberliegenden Oberflächen der Werkstoffplatten. Sollen zum Beispiel die Längskanten von zwei Werkstoffplatten miteinander gefügt werden, kann eine Zustellung über die anderen Längskanten erfolgen. Diese Zustellung kann über einen angetriebenen Seitenanschlag erfolgen, der dazu beiträgt, dass positionsgenau die Platten zugeführt und anschließend gefügt werden.

Es ist ebenso von Vorteil, wenn die Kraft beim Führen oder Positionieren und insbesondere auch beim Fügen der Werkstoffplatten gesteuert und/oder geregelt wird. Dies kann durch entsprechende Sensoren an den Seitenanschlägen umgesetzt werden, so dass genau so viel Kraft aufgebracht wird, wie für den Fügeprozess erforderlich ist, ohne die Werkstoffplatten zu beschädigen.

Die eingangs gestellte Aufgabe wird auch durch eine Vorrichtung zum Fügen mehrerer Werkstoffplatten gelöst. Die Vorrichtung weist eine Fügestation auf, in der die Kanten einer ersten Werkstoffplatte mit einer Oberfläche einer weiteren Werkstoffplatte fügbar sind. Eine Flächenvorbereitungseinheit ist zum Vorbereiten wenigstens einer der zu fügenden Oberflächen vorgesehen. Auch hier erfolgt die eingangs definierte Relativbewegung zwischen Flächenvorbereitungseinheit und zu fügender Oberfläche, wobei im Anschluss daran die zu fügenden Oberflächen mit Anpressdruck zur Erzielung einer stoffschlüssigen oder kraftschlüssigen Verbindung gefügt werden. Die Flächenvorbereitungseinheit ist in einem Winkel von mehr als 45° zur Fläche wenigstens einer Werkstoffplatte angeordnet, das heißt, sie wird quer zur Längserstreckung, Quererstreckung oder einer anderen Erstreckung entlang der Fläche der Werkstoffplatte geführt. Mit dieser Vorrichtung kann bei geringer Lagerhaltung eine Vielzahl von Geometrien schnell gefertigt werden. Gleichzeitig ist die Durchsatzleistung der Vorrichtung gesteigert, da Umstellzeiten weitestgehend entfallen. Aus Standardelementen können beliebig lange und/oder breite Werkstoffplatten erzeugt und hergestellt werden.

Die Flächenvorbereitungseinheit ist normal zur Oberfläche der wenigstens einen Werkstoffplatte in einem Fügespalt angeordnet und kann besonders bevorzugt parallel zu den zu fügenden Oberflächen im Spalt angeordnet werden. Damit lassen sich beliebig zu fügende Oberflächen entlang den Kanten und Flächen der Werkstoffplatten definieren, so dass eine Vielzahl unterschiedlicher Varianten von Werkstoffplatten hinsichtlich Länge, Breite, Form und Größe hergestellt werden kann.

Die Flächenvorbereitungseinheit ist ein Heizschwert, das die wenigstens eine zu fügende Oberfläche mit Wärme beaufschlagt, um dadurch die zu fügenden Oberflächen aufzuschmelzen, damit beim anschließenden Fügeprozess eine Verbindung stoffschlüssig z.B. auch unter Verwendung unterschiedlicher Werkstoffe erfolgen kann.

Im Ausführungsbeispiel ist die Flächenvorbereitungseinheit als eine Kombination aus einem Heizschwert und einem Führungsschwert ausgeführt. In diesem Fall werden die Werkstoffplatten durch Anpressmittel gegen das Führungsschwert gedrückt, das vorzugsweise etwas dünner als das Heizschwert ist, damit ein anschließender berührender Transport der Werkstoffplatten am Heizschwert gewährleistet wird. Damit ist das Führungsschwert dem Heizschwert beim Fügeprozess vorauseilend in Zuführrichtung der Werkstoffplatten vor dem Heizschwert stromaufwärts zu diesem angeordnet.

Alternativ kann die Flächenvorbereitungseinheit eine Auftragseinheit zum Auftragen eines Verbindungsmittels wie Leim, Klebstoff oder anderen Zusatzstoffen sein, die das Verbindungsmittel auf eine oder beide der zu fügenden Oberflächen aufträgt. Durch die Anordnung der Auftragseinheit quer zur Flächenerstreckung der Werkstoffplatten können auch mit dieser Flächenvorbereitungseinheit beliebige Formen und Geometrien erzeugt werden. Dabei wird gleichzeitig nur so viel an Verbindungsmittel aufgetragen, wie für den anschließenden Fügeprozess erforderlich ist, um eine kraftschlüssige Verbindung zu erreichen.

Zur Überwachung des Anpressdrucks werden in der Fügestation Krafterfassungsmittel zum Beispiel in Form von Drucksensoren vorgesehen, die zum Beispiel in den Seitenanschlägen angeordnet sein können. Für die Krafterfassungsmittel können die Anpressdrücke erfasst werden, so dass ein optimales online-Einrichten der Anlage möglich wird. Besonders bevorzugt kann die Krafterfassung die gemessene Kraft als Eingangsgröße für eine Steuer- oder Regeleinrichtung zur Steuerung oder Regelung der Kraft verwenden, um dadurch die auf die zu fügenden Oberflächen beim Fügeprozess einwirkende Kraft exakt und materialschonend zu steuern bzw. zu regeln, oder zu protokollieren.

In einer bevorzugten Ausführungsform ist eine Positioniereinrichtung zum passgenauen Positionieren der Werkstoffplatten in der Fügestation vorgesehen, die die Werkstoffplatten vorzugsweise an den, den zu fügenden Oberflächen gegenüberliegenden Oberflächen führt. Dies kann durch einen angetriebenen Seitenanschlag erfolgen, der insofern eine seitliche Abstützung der Platten zur Erzeugung eines Anpressdrucks während des Fügens und/oder nach dem Auftragen des Verbindungsmittels gewährleistet.

Im Folgenden wird die Erfindung anhand von Ausführungsbeispielen näher erläutert. Es zeigen:
- Fig. 1: eine schematische Darstellung einer Vorrichtung zur Durchführung eines kontinuierlichen Fügeverfahrens,
- Fig. 2: eine schematische Darstellung zur Durchführung eines diskontinuierlichen Fügeverfahrens (nicht nach den beigefügten Ansprüchen und damit nicht erfindungsgemäß),
- Fig. 3: eine geschnittene Darstellung von miteinander gefügten Werkstoffplatten,
- Fig. 4: eine Draufsicht auf eine schematische Darstellung einer Vorrichtung gemäß Fig. 1 mit zugehöriger Regeleinrichtung.

### Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

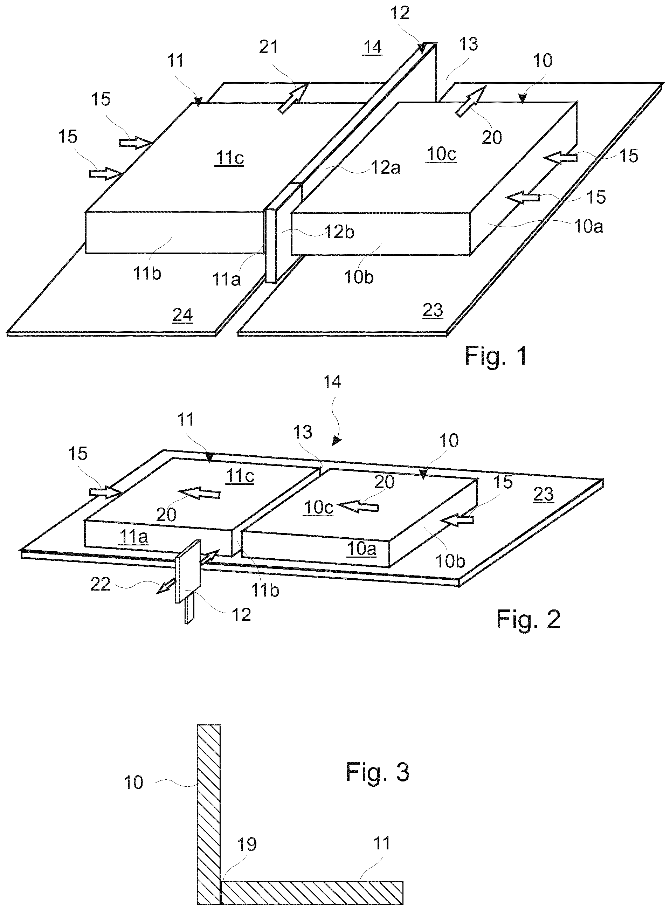

Die Figuren 1 und 2 zeigen eine Vorrichtung zum Durchführen eines Verfahrens zum Fügen mehrerer Werkstoffplatten 10, 11. Als Werkstoffplatten kommen beliebige Platten in Frage, die wie eingangs erläutert behandelte oder nicht behandelte, geschäumte oder nicht geschäumte Dämmstoffplatten oder auch andere Werkstoffplatten sein können. Dabei können beim Fügen sowohl artgleiche als auch artungleiche Platten gefügt werden. Die Werkstoffplatten haben üblicherweise eine Längserstreckung, so dass die Werkstoffplatten 10, 11 wie in den Figuren 1 und 2 dargestellt Längskanten 10a, 11a und Querkanten 10b, 11b aufweisen. An die Längskanten und Querkanten grenzen Flächen 10c, 11c an, die gegenüber den Längskanten und Querkanten großflächiger sind und insofern die Flächenerstreckung der Werkstoffplatten bestimmen.

Beim Fügeverfahren werden insbesondere Werkstoffplatten an ihren Kanten gefügt, das heißt, die Werkstoffplatten werden an ihren Längskanten 10a, 11a aneinandergefügt, um mehr Breite zu gewinnen, und an ihren Querkanten 10b, 11b, um mehr Länge zu erzielen. Gleichwohl ist auch ein Fügen möglich, bei dem wie in Fig. 3 dargestellt eine Kante einer Werkstoffplatte 11 an eine Fläche einer Werkstoffplatte 10 angefügt wird, wobei sich die Fügenaht 19 ausbildet. Grundsätzlich sind beliebige Geometrien durch ein derartiges Fügeverfahren möglich, wobei gleichwohl auf Standardmaße der Werkstoffplatten zurückgegriffen werden kann, so dass eine bisher übliche umfangreiche Lagerhaltung von Werkstoffplatten unterschiedlicher Größen und Dicken entfallen kann.

Fig. 1 zeigt, dass bei einem kontinuierlichen Verfahren auf Fördermitteln 23, 24 einmal die Werkstoffplatte 10 in Transportrichtung 20 und zum anderen die Werkstoffplatte 11 in Transportrichtung 21 zugeführt werden. Im vorliegenden Fall passieren die Längskanten 10a, 11a eine Flächenvorbereitungseinheit 12, wobei eine berührende Kontaktierung der Werkstoffplatten 10, 11 an dieser Stelle erfolgt. Sollen statt der Längskanten 10a, 11a die Querkanten 10b, 11b gefügt werden, können die Kanten einfach vertauscht werden, das heißt die Werkstoffplatten werden in einer anderen Orientierung der Flächenvorbereitungseinheit 12 zugeführt. In Fig. 1 ist die Flächenvorbereitungseinheit stationär angeordnet und die Werkstoffplatten 10, 11 werden relativ zur Flächenvorbereitungseinheit 12 bewegt.

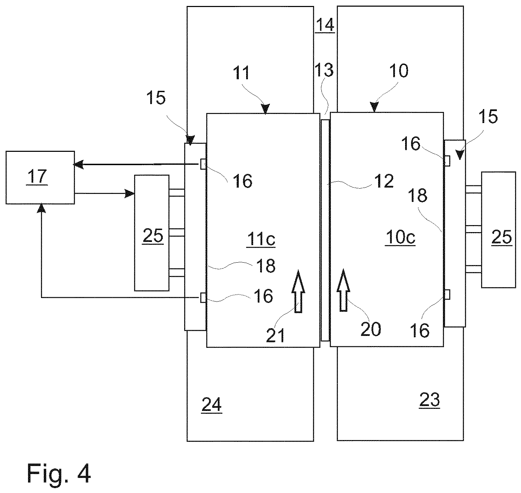

Nachdem die zu fügenden Oberflächen von der Flächenvorbereitungseinheit 12 vorbereitet worden sind, werden sie anschließend mit Anpressdruck stoffschlüssig oder kraftschlüssig miteinander verbunden. Nachdem also die Flächenvorbereitungseinheit 12 im Fügespalt 13 eingeführt ist, wird anschließend mit Anpressmitteln 15, die in Fig. 1, 2 durch Pfeile dargestellt sind, ein Anpressdruck erzeugt. Gemäß Fig. 4 kann es sich bei den Anpressmitteln um einen Seitenanschlag handeln, der von einer Antriebseinheit 25 antreibbar ist. Die Flächenvorbereitungseinheit 12 steht in Fig. 1, 2 in einem stumpfen Winkel von mehr als 45° bis zu 90° zur Fläche 10c, 11c wenigstens einer Werkstoffplatte und wird relativ zu den zu fügenden Oberflächen geführt. Wesentlich ist also die Anordnung der Flächenvorbereitungseinheit 12 quer zur Flächenerstreckung der Fläche 10c, 11c. Grundsätzlich erfolgt beim Fügen von Kanten die Relativbewegung der Flächenvorbereitungseinheit 12 entlang der zu fügenden Kanten, wobei diese auch nicht nur entlang der vorgegebenen Kanten der Werkstoffplatten 10, 11 geführt werden kann, sondern auch entlang neuer oder zuvor zugeschnittener Kanten. Soll allerdings ein Winkelstoß wie in Fig. 3 erzeugt werden, handelt es sich bei einer der zu fügenden Oberflächen der Werkstoffplatten um eine Längskante 10a, 11a oder Querkante 10b. 11b und bei der anderen zu fügenden Oberfläche um eine Fläche 10c, 11c oder zumindest einen Teil davon.

Bei dem in Fig. 1 dargestellten kontinuierlichen Verfahren erfolgt stromabwärts der Flächenvorbereitungseinheit 12 der eigentliche Fügeprozess, was in den Figuren nicht dargestellt ist. Alternativ kann gemäß Fig. 2 ein Fügeprozess auch intermittierend erfolgen, das heißt, auf einem Fördermittel 23 werden die Werkstoffplatten 10, 11 der Fügestation 14 zugeführt, wobei im Ausführungsbeispiel der Fig. 2 die Querkanten 10b, 11b gefügt werden. Auch hier gilt, dass durch Austausch von Längs- und Querkanten gegebenenfalls auch Längskanten 10a, 11a miteinander gefügt werden können. Um die zu fügenden Oberflächen der Werkstoffplatten 10, 11 vorzubereiten, wird durch den Fügespalt 13 die Flächenvorbereitungseinheit 12 in Bewegungsrichtung der Pfeile 22 durch den Spalt 13 hindurchgeführt und anschließend werden die Werkstoffplatten durch die Anpressmittel 15 aneinander gepresst und damit stoffschlüssig oder kraftschlüssig gefügt. Ist der Fügeprozess abgeschlossen, können über die Fördermittel 23 die nächsten zu fügenden Werkstoffplatten in Transportrichtung 20 der Fügestation 14 zugeführt werden.

Die Flächenvorbereitungseinheit 12 ist in beiden Fällen normal zur Fläche 10c, 11c der wenigstens einen Werkstoffplatte 11 in Fig. 3 bzw. der mehreren Werkstoffplatten 10, 11 in Fig. 1 und 2 im Fügespalt 13 geführt oder in den Fügespalt gemäß Fig. 2 einführbar. Die Flächenvorbereitungseinheit 12 ist stehend wie in Fig. 1 ausgebildet oder kann - nicht nach den beigefügten Ansprüchen und damit nicht erfindungsgemäß - beweglich wie in Fig. 2 ausgebildet sein. Grundsätzlich erfolgt die Bewegung der Flächenvorbereitungseinheit parallel zu den zu fügenden Oberflächen im Fügespalt 13.

Dabei ist die Flächenvorbereitungseinheit 12 so ausgebildet, dass sie wenigstens eine der Werkstoffplatten 10, 11 mit Wärme beaufschlagt und anschmilzt, das heißt, sie umfass ein Heizschwert 12a. Die Flächenvorbereitungseinheit ist als eine Kombination aus einem Heizschwert 12a und einem Führungsschwert 12b ausgeführt. In diesem Fall werden die Werkstoffplatten 10, 11 durch die Anpressmittel 15 gegen das Führungsschwert 12b gedrückt, das vorzugsweise etwas dünner als Heizschwert 12a ist, damit ein anschließender berührender Transport der Werkstoffplatten am Heizschwert gewährleistet wird. Damit ist das Führungsschwert 12b dem Heizschwert 12a beim Fügeprozess vorauseilend in Zuführrichtung der Werkstoffplatten vor dem Heizschwert stromaufwärts zu diesem angeordnet.

Die durch das Heizschwert angeschmolzenen Oberflächen werden anschließend gefügt. Die Flächenvorbereitungseinheit 12 kann aber auch ebenso als Auftragseinheit für ein Verbindungsmittel wie Klebstoff, Leim oder andere Zusatzstoffe ausgebildet sein, um die zu fügenden Oberflächen mit diesem Verbindungsmittel zu versehen, so dass anschließend der Fügeprozess durchgeführt werden kann. Welche Flächenvorbereitungseinheit 12 verwendet wird, hängt von der Art der Werkstoffplatten und dem gewünschten Ergebnis ab. Beim Anschmelzen bzw. Aufschmelzen der zu fügenden Oberflächen ergibt sich eine stoffschlüssige und üblicherweise sortenreine Verbindung, was beim Recyceln und der Materialauswahl Vorteile hat. Mit Klebstoff, Leim oder anderen Zusatzstoffen ergibt sich eine eher kraftschlüssige Verbindung, die dann nicht sortenrein ist. Sollen nicht nur artgleiche, sondern artungleiche Werkstoffplatten miteinander gefügt werden, erfolgt eine Auswahl der Art der Flächenvorbereitungseinheit 12 nach den jeweiligen Anforderungen der Werkstoffe.

Die Werkstoffplatten 10, 11 werden in der Fügestation 14 zueinander passgenau positioniert oder sind dort positionierbar, das heißt, sie werden durch entsprechende Hilfsmittel bereits so exakt zugeführt, dass möglichst keine Nacharbeiten erforderlich sind. In der Fügestation 14 selbst werden die Werkstoffplatten 10, 11 unter sensorischer Überwachung des Anpressdrucks miteinander verbunden. Hierzu kann gemäß Fig. 4 insbesondere eine seitliche Abstützung der Werkstoffplatten erfolgen oder die Werkstoffplatten können so an einer von den zu fügenden Oberflächen verschiedener Oberflächen der Fügestation geführt werden, dass eine exakte Positionierung möglich wird. Im Ausführungsbeispiel werden zum Positionieren von Antriebseinheiten 25 angetriebene Seitenanschläge als Anpressmittel 15 vorgesehen, die die Werkstoffplatten 10, 11 an die den zu fügenden Oberflächen gegenüberliegenden Oberflächen positionieren. An diesen Seitenanschlägen oder an einer geeigneten anderen Stelle sind Krafterfassungsmittel 16 in Form von Drucksensoren vorgesehen, so dass mit gesteuerter oder geregelter Kraftaufbringung ein gezielter Anpressdruck eingehalten werden kann, ohne die Werkstoffplatten durch zu hohen Druck zu beschädigen oder bei zu geringem Druck nicht zu fügen. Hierzu ist eine Steuer- oder Regeleinrichtung 17 vorgesehen, in der die von den Krafterfassungsmitteln 16 erfasste Kraft Eingang findet (symbolisch Pfeil), so dass die Antriebseinheit gemäß Fig. 4 von der Steuer- oder Regeleinrichtung 17 ein Steuersignal (Pfeil von 17 nach 25) zur Betätigung des Seitenanschlags zur Regelung der Kraft entsprechend betätigt werden kann. Die Steuer- oder Regeleinrichtung 17 ist in Fig. 4 nur auf der linken Seite dargestellt, die Steuerung oder Regelung gilt jedoch für das Anpressmittel auf der in Fig. 4 rechten Seite analog.

Vorzugsweise werden die Werkstoffplatten 10, 11 während des Fügens also an wenigstens einer von den zu fügenden Oberflächen verschiedenen Oberfläche der Werkstoffplatten 10, 11 geführt und positioniert. Die Führung oder Positionierung der Werkstoffplatten erfolgt insbesondere an den, den zu fügenden Oberflächen gegenüberliegenden Oberflächen der Werkstoffplatten 10, 11.

Die Figuren 1 und 2 zeigen schematisch auch die Vorrichtung zum Fügen mehrerer Werkstoffplatten, denn grundsätzlich können auch mehr als zwei Werkstoffplatten miteinander gefügt werden. Soweit nicht bereits im Zusammenhang mit dem Verfahren erläutert, wird daher nun ergänzend auf die Vorrichtung eingegangen.

In der Vorrichtung ist eine Fügestation 14 vorgesehen, in der wenigstens eine zu fügende Oberfläche einer ersten Werkstoffplatte 10 mit wenigstens einer Oberfläche einer weiteren Werkstoffplatte 11 fügbar ist. Insbesondere wird in der Fügestation wenigstens eine Längskante 10a und/oder Querkante 10b einer ersten Werkstoffplatte 10 mit wenigstens einer Oberfläche einer weiteren Werkstoffplatte gefügt. Die Flächenvorbereitungseinheit 12 ist stationär und die wenigstens eine der zu fügenden Oberflächen ist beweglich angeordnet, damit eine Relativbewegung zwischen der Flächenvorbereitungseinheit und der wenigstens einen zu fügenden Oberfläche möglich ist.

Nach Vorbereitung der zu fügenden Oberflächen während der Relativbewegung werden die zu fügenden Oberflächen mittels Anpressmittel 15 mit Anpressdruck zur Erzielung einer stoffschlüssigen oder kraftschlüssigen Verbindung gefügt. Als Anpressmittel kommen insbesondere eine seitliche Abstützung, ein angetriebener Seitenanschlag gegebenenfalls in Verbindung mit Krafterfassungsmitteln 16 wie Drucksensoren in Betracht. Zur Vorbereitung der zu fügenden Oberfläche ist die Flächenvorbereitungseinheit 12 in einem stumpfen bis rechten Winkel von mehr als 45° zur Fläche 10c, 11c wenigstens einer Werkstoffplatte 10, 11 angeordnet, das heißt sie ist quer zur Flächenerstreckung der Werkstoffplatte geführt. Die Flächenvorbereitungseinheit 12 taucht normal zur Oberfläche 10c, 11c der wenigstens einen Werkstoffplatte 10, 11 in einen Fügespalt 13 ein, der zwischen den zu fügenden Werkstoffplatten vorhanden ist. Die Flächenvorbereitungseinheit ist in diesem Fügespalt angeordnet (Fig. 1) oder in den Fügespalt 13 einführbar (Fig. 2). Grundsätzlich bewegt sich die Flächenvorbereitungseinheit in der Regel parallel zu den zu fügenden Oberflächen im Fügespalt 13.

Die Flächenvorbereitungseinheit 12 umfasst ein Heizschwert 12a, das die wenigstens eine zu fügende Oberfläche mit Wärme beaufschlägt, um dadurch die zu fügenden Oberflächen anzuschmelzen bzw. aufzuschmelzen. Die Flächenvorbereitungseinheit 12 kann aber auch je nach Werkstoff als Auftragseinheit zum Auftragen eines Verbindungsmittels wie Klebstoff oder Leim oder andere Zusatzstoffe zum Verbinden der Oberflächen auf die zu fügenden Oberflächen ausgebildet sein. Zum passgenauen Positionieren der Werkstoffplatten 10, 11 in der Fügestation 14 ist eine Positioniereinheit 18 vorgesehen, die die Werkstoffplatten 10, 11 vorzugsweise an den Oberflächen führt, die zu den zu fügenden Oberflächen gegenüberliegend angeordnet sind. Dies sind zum Beispiel in Fig. 1 die Längskanten 10a, 11a, die nicht an der Flächenvorbereitungseinheit 12 angeordnet sind.

In der Fügestation 14 sind Krafterfassungsmittel 16 zur Überwachung des Anpressdruckes vorgesehen. Über eine Steuer- oder Regeleinrichtung 17 zur Steuerung oder Regelung der Kraft beim Führen oder Positionieren der Werkstoffplatte lässt sich der Fügeprozess regeltechnisch abbilden.

Für den Aufbau der Anlage kann zwischen der Verbindung durch Schweißen mit einem Heizschwert und Kleben unterschieden werden. Grundsätzlich erfolgt beim Schweißen als Fügeprozess eine Zuführung unter Justierung der zugeführten und zu fügenden Werkstoffplatten auf das Heizschwert 12a hin. Dabei werden vorzugsweise die Vorderkanten der Werkstoffplatten zueinander positioniert. Von Vorteil ist es, wenn regeltechnisch ein synchroner Start der zugeführten Werkstoffplatten zur Flächenvorbereitungseinheit 12 hin erfolgt. Vorzugsweise ist das parallel zu den fügenden Kanten bzw. Flächen aufgebaute Heizelement so dimensioniert, dass es in seiner Größe energieoptimiert auf die zu fügende Geometrie abgestimmt ist. Dies bedeutet, dass es zum Beispiel die Länge der Längskante oder Querkante der zu fügenden Werkstoffplatte aufweisen kann.

Über eine seitliche Abstützung wie die Positioniermittel 18 kann während des Fügens der Anpressdruck auf die Werkstoffplatten 10, 11 erzeugt werden. Die Werkstoffplatten werden über ein synchron laufendes Transportsystem in Form der Fördermittel 23, 24 parallel zur Fügestation 14 zugeführt. Dabei werden vorzugsweise große Anlageflächen zum Minimieren der lokalen Anpresskraft vorgesehen, das heißt, insbesondere auf den der Flächenvorbereitungseinheit 12 abgewandten Seite, um dadurch Beschädigungen der Werkstoffplatten zu vermeiden. Eine exakte Positionierung der Oberflächen zueinander kann durch vertikale Verfahrbewegungen erfolgen, so dass eine Einstellbarkeit auf die Plattendicke der Werkstoffplatten vorliegt. Auf ähnliche Art und Weise können Dickentoleranzen der zu fügenden Platten ausgeglichen werden oder es können auch gezielt Platten unterschiedlicher Dicke miteinander gefügt werden. Dasselbe gilt auch bei unterschiedlicher Plattenbreite oder einer Einstellung auf unterschiedlich breite Platten.

Die meisten dieser Anforderungen gelten auch für eine Vorrichtung, bei der die Flächenvorbereitungseinheit 12 als Auftragseinheit für ein Verbindungsmittel ausgeführt ist. So werden auch hier die Werkstoffplatten positioniert dem Auftragssystem zugeführt, wobei eine Positionierung der Vorderkanten der Werkstoffplatten 10, 11 zueinander erfolgt. Ebenso kann ein synchroner Start der zugeführten Werkstoffplatten parallel zu den zu fügenden Oberflächen erfolgen. Durch die Auftragseinheit erfolgt dann der Auftrag von Leim, Klebstoff oder sonstigen Zusatzstoffen, wobei nach dem Auftrag über die Anpressmittel 15 ein Anpressdruck auf die Plattenkanten erfolgt. Die Fördermittel sind als synchron laufendes Transportsystem parallel zur Fügestation 14 ausgebildet, auch hier mit großen Anlagenflächen zur Minimierung der lokalen Anpresskraft auf die Kanten und somit zur Vermeidung von Beschädigungen. Durch entsprechende Verstellmöglichkeiten der Fördermittel ist eine exakte Positionierung der Oberflächen zueinander bzw. eine Einstellbarkeit auf Plattendicke und Plattenbreite gegeben. In beiden Fällen kann auch ein Kreuzversatz ohne kreuzförmige Fügestellen bewerkstelligt werden.

Die Werkstoffplatten können kontinuierlich oder diskontinuierlich zugeführt werden und können gegebenenfalls auch biegesteif sein. Vorzugsweise erfolgt eine Verbindung der Werkstoffplatten entlang ihrer Längskanten, das heißt längs oder quer miteinander. Dabei ist auch ein Fügen artgleicher und artungleicher Werkstoffe gegebenenfalls auch mit unterschiedlichen Schmelztemperaturen möglich. Gefügt werden können wenigstens zwei Platten aber auch mehr als zwei Werkstoffplatten.

Ist die Flächenvorbereitungseinheit als Heizschwert 12a ausgebildet, wird regelmäßig ein dünnes Heizschwert verwendet. Das Heizschwert ist so gestaltet, dass dicke und dünne Platten an dem Heizschwert kontinuierlich oder bei der Ausführungsform gemäß Fig. 2 diskontinuierlich vorbei geführt werden können. Das Heizschwert kann dauerhaft oder getaktet betrieben werden, das heißt die Temperatur kann auch bedarfsweise kurzfristig erhöht oder verringert werden. Zum Beispiel wird das Heizschwert vor der Zuführung des zu fügenden Halbzeugs kurzzeitig mit höherer Energie beaufschlagt. Vorzugsweise ist das Heizschwert mit einer Regelungseinheit ausgestattet, das heißt, es sind Temperaturfühler und eine Temperatursteuerung oder besser Temperaturregelung vorgesehen. Die Oberfläche des Heizschwertes ist vorzugsweise so ausgeführt, dass ein Anhaften des zu verschweißenden Materials verringert oder ausgeschlossen wird. Dies ist zum Beispiel durch eine entsprechende Oberflächenbehandlung und Beschichtung möglich oder auch durch besondere Oberflächengestaltung bis hin zur Politur. Vorzugsweise ist das Heizschwert selbstreinigend, das heißt durch das kontinuierliche und kontaktbehaftete Vorbeiführen (zumindest beim kontaktierenden Vorbereiten), wird das Heizschwert gereinigt. Das Heizschwert bzw. Heizelement kann zum Beispiel ein dünnes heizbares Stahlband sein, in das eine hohe Energiedichte eingebracht werden kann. Dies bedeutet, dass die Energie schnell bzw. dynamisch zugeführt wird, zum Beispiel aber auch über den Peltiereffekt schnell wieder das heiße Schwert abgekühlt werden kann. Die bevorzugten Temperaturbereiche richten sich nach dem zu fügenden Werkstoff, wobei die Oberflächentemperatur am zu fügenden Werkstoff sich nach den Verarbeitungstemperaturen der Werkstoffplatten richtet. Das Heizschwert soll mechanisch dauerfest und wärmebeständig sein und eine möglichst geringe Wärmedehnung haben. Hierzu sind Vorrichtungen zum dauerhaften Ausgleich der Wärmedehnung zum Beispiel durch Vorspannung mit Gewichten, Federn und dergleichen bekannt. Das Heizschwert kann auch über einzelne unterschiedlich temperierte Zonen verfügen, um zum Beispiel artungleiche Wertstoffplatten artgerecht vorzubehandeln. Vorzugsweise werden die Flächen der Werkstoffplatten parallel zugeführt.

Die Zuführung der Werkstoffplatten 10, 11 erfolgt so exakt wie möglich, so dass vor, während und nach dem Fügen ein Plattenversatz minimiert, ausgeschlossen oder gezielt eingestellt wird, so dass eine Nacharbeit weitestgehend vermieden werden kann. Möglich ist eine derartige Nacharbeit grundsätzlich jedoch immer noch. Während des Fügeprozesses werden die Platten zueinander positioniert, so dass sie weitestgehend exakt zueinander justiert sind. Auch dadurch ist eine Nacharbeit der neu entstandenen Fläche/Kante weitestgehend nicht mehr erforderlich bzw. die gewünschte Außenkontur wird erreicht. Die Zuführung der Werkstoffplatten kann, wie im Stand der Technik, durch Vakuumbänder, Luftkissen, Mangelrollen, Ausrichtrollen, Anschlagslineale, stillstehend oder angetrieben, und Schieber oder Pusher erfolgen.

### Bezugszeichenliste

- 10, 11: Werkstoffplatte
- 10a, 11a: Längskante
- 10b, 11b: Querkante
- 10c, 11c: Fläche
- 12: Flächenvorbereitungseinheit
- 12a: Heizschwert
- 13: Fügespalt
- 14: Fügestation
- 15: Anpressmittel
- 16: Krafterfassungsmittel
- 17: Steuer- oder Regeleinrichtung
- 18: Positioniermittel
- 19: Fügenaht
- 20, 21: Transportrichtung
- 22: Bewegungsrichtung
- 23, 24: Fördermittel
- 25: Antriebseinheit für 18

## Patentansprüche

1. Verfahren zum Fügen mehrerer Werkstoffplatten (10, 11) mit mehreren Oberflächen, wobei die Oberflächen der Werkstoffplatten durch mehrere aneinandergrenzende Längskanten (10a, 11a), Querkanten (10b, 11b) und Flächen (10c, 11c) gebildet sind, welche Flächen an die Längskanten (10a, 11a) und Querkanten (10b, 11b) angrenzen und gegenüber den Längskanten und Querkanten großflächiger sind,
wobei die Werkstoffplatten (10, 11) in einer Fügestation (14) zueinander passgenau positioniert werden,
wobei wenigstens eine Flächenvorbereitungseinheit (12) stationär und wenigstens eine der zu fügenden Oberflächen beweglich angeordnet wird für eine Relativbewegung zueinander, wobei die ein Heizschwert (12a) umfassende Flächenvorbereitungseinheit (12) wenigstens eine der Werkstoffplatten (10, 11) mit Wärme beaufschlagt und anschmilzt und damit die wenigstens eine zu fügende Oberfläche zum Fügen vorbereitet wird,
wobei die angeschmolzenen, zu fügenden Oberflächen anschließend mit Anpressdruck stoffschlüssig oder kraftschlüssig miteinander verbunden werden,
wobei die Flächenvorbereitungseinheit (12) normal zur Flächenerstreckung der Fläche (10c, 11c) der wenigstens einen Werkstoffplatte (10, 11) geführt wird,
wobei wenigstens eine Längskante (10a) und/oder Querkante (10b) einer ersten Werkstoffplatte (10) mit wenigstens einer Oberfläche einer weiteren Werkstoffplatte (11) gefügt wird,
wobei die Werkstoffplatten durch Anpressmittel gedrückt werden, und
wobei die Flächenvorbereitungseinheit (12) in einem stumpfen bis rechten Winkel von mehr als 45 Grad zur Fläche (10c, 11c) wenigstens einer Werkstoffplatte (10, 11) relativ zu den zu fügenden Oberflächen geführt wird,
**dadurch gekennzeichnet, dass** die wenigstens eine zu fügende Oberfläche während der Relativbewegung zum Fügen vorbereitet wird,
dass die Flächenvorbereitungseinheit (12) in einem Fügespalt (13) geführt ist, in dem auch ein Führungsschwert (12b) angeordnet ist,
dass dem die Werkstoffplatten kontaktierenden Heizschwert (12a) das beim Fügeprozess vorauseilende Führungsschwert (12b) in Zuführrichtung der Werkstoffplatten vor dem Heizschwert zugeordnet ist und
dass die Werkstoffplatten in der Fügestation (14) unter sensorischer Überwachung des Anpressdrucks verbunden werden.

2. Verfahren nach Anspruch 1, **dadurch gekennzeichnet, dass** das Führungsschwert (12b) dünner als das Heizschwert (12a) ist.

3. Verfahren nach Anspruch 1 oder 2, **dadurch gekennzeichnet, dass** die Flächenvorbereitungseinheit (12) parallel zu den zu fügenden Oberflächen in dem Fügespalt (13) geführt wird oder in den Fügespalt einführbar ist.

4. Verfahren nach einem der vorhergehenden Ansprüche, **dadurch gekennzeichnet, dass** die Flächenvorbereitungseinheit (12) als Auftragseinheit ein Verbindungsmittel zum Verbinden der Oberflächen auf die zu fügenden Oberflächen aufträgt.

5. Verfahren nach einem der vorhergehenden Ansprüche, **dadurch gekennzeichnet, dass** die Werkstoffplatten (10, 11) unter Ausbildung von Winkelstößen miteinander gefügt werden.

6. Verfahren nach einem der vorhergehenden Ansprüche, **dadurch gekennzeichnet, dass** die Werkstoffplatten (10, 11) während des Fügens wenigstens an von den zu fügenden Oberflächen verschiedenen Oberflächen der Werkstoffplatten (10, 11) geführt und positioniert werden.

7. Verfahren nach Anspruch 6, **dadurch gekennzeichnet, dass** die Führung oder Positionierung der Werkstoffplatten (10, 11) an den zu fügenden Oberflächen gegenüberliegenden Oberflächen der Werkstoffplatten (10, 11) erfolgt.

8. Verfahren nach Anspruch 6 oder 7, **dadurch gekennzeichnet, dass** die Kraft beim Führen oder Positionieren der Werkstoffplatten (10, 11) gesteuert und/oder geregelt wird.

9. Vorrichtung zum Fügen mehrerer Werkstoffplatten (10, 11) mit mehreren Oberflächen, wobei die Oberflächen der Werkstoffplatten durch mehrere aneinandergrenzende Längskanten (10a, 11a), Querkanten (10b, 11b) und Flächen (10c, 11c) gebildet sind, welche Flächen an die Längskanten (10a, 11a) und Querkanten (10b, 11b) angrenzen und gegenüber den Längskanten und Querkanten großflächiger sind,
wobei eine Fügestation (14) vorgesehen ist, in der wenigstens eine zu fügende Oberfläche einer ersten Werkstoffplatte (10) mit wenigstens einer Oberfläche einer weiteren Werkstoffplatte (11) zueinander passgenau positionierbar und fügbar ist,
wobei wenigstens eine Flächenvorbereitungseinheit (12) zum Vorbereiten wenigstens einer der zu fügenden Oberflächen vorgesehen ist,
wobei die Flächenvorbereitungseinheit (12) stationär und die wenigstens eine der zu fügenden Oberflächen beweglich angeordnet ist für eine Relativbewegung zueinander, wobei die ein Heizschwert (12a) umfassende Flächenvorbereitungseinheit (12) wenigstens eine der Werkstoffplatten (10, 11) mit Wärme beaufschlagt und anschmilzt und damit die wenigstens eine zu fügende Oberfläche zum Fügen vorbereitet,
wobei Anpressmittel (15) zum anschließenden Anpressen der zu fügenden Oberflächen mit Anpressdruck zur Erzielung einer stoffschlüssigen oder kraftschlüssigen Verbindung vorgesehen sind,
wobei die Flächenvorbereitungseinheit (12) normal zur Flächenerstreckung der Fläche (10c, 11c) der wenigstens einen Werkstoffplatte (10, 11) in einem Fügespalt (13) führbar ist,
wobei in der Fügestation wenigstens eine Längskante (10a) und/oder Querkante (10b) einer ersten Werkstoffplatte (10) mit wenigstens einer Oberfläche einer weiteren Werkstoffplatte (11) fügbar ist,
wobei die Werkstoffplatten durch die Anpressmittel gedrückt werden,
wobei die Flächenvorbereitungseinheit (12) in einem stumpfen bis rechten Winkel von mehr als 45 Grad zur Fläche (10c, 11c) wenigstens einer Werkstoffplatte (10, 11) angeordnet ist,
**dadurch gekennzeichnet, dass** die wenigstens eine zu fügenden Oberfläche während der Relativbewegung zum Fügen vorbereitet wird,
dass dem die Werkstoffplatten kontaktierenden Heizschwert (12a) ein dem Heizschwert beim Fügeprozess vorauseilendes Führungsschwert (12b) im Fügespalt (13) in Zuführrichtung der Werkstoffplatten vor dem Heizschwert zugeordnet ist,
dass in der Fügestation (14) Krafterfassungsmittel (16) zur Überwachung des Anpressdrucks vorgesehen sind.

10. Vorrichtung nach Anspruch 9, **dadurch gekennzeichnet, dass** das Führungsschwert (12b) dünner als das Heizschwert (12a) ist

11. Vorrichtung nach Anspruch 9 oder 10, **dadurch gekennzeichnet, dass** die Flächenvorbereitungseinheit (12) parallel zu den zu fügenden Oberflächen im Fügespalt (13) angeordnet ist.

12. Vorrichtung nach einem der Ansprüche 9 bis 11, **dadurch gekennzeichnet, dass** die Flächenvorbereitungseinheit (12) als Auftragseinheit zum Auftragen eines Verbindungsmittels zum Verbinden der Oberflächen, auf wenigstens eine der zu fügenden Oberflächen ausgebildet ist.

13. Vorrichtung nach einem der Ansprüche 9 bis 12, **dadurch gekennzeichnet, dass** eine Positioniereinrichtung (16) zum passgenauen Positionieren der Werkstoffplatten (10, 11) in der Fügestation (14) vorgesehen ist, die die Werkstoffplatten (10, 11) an den den zu fügenden Oberflächen gegenüberliegenden Oberflächen führt.

14. Vorrichtung nach Anspruch 9, **dadurch gekennzeichnet, dass** eine Steuer- oder Regeleinrichtung (17) zur Steuerung oder Regelung der Kraft beim Führen oder Positionieren der Werkstoffplatten (10, 11) vorgesehen ist.

## Claims

1. A method for joining a plurality of material panels (10, 11) having a plurality of surfaces, wherein the surfaces of the material panels are formed by a plurality of mutually adjoining longitudinal edges (10a, 11a), transverse edges (10b, 11b) and faces (10c, 11c), wherein the faces adjoin the longitudinal edges (10a, 11a) and transverse edges (10b, 11b) and are of a larger surface area than the longitudinal edges and transverse edges,
wherein the material panels (10, 11) are positioned precisely in relation to one another in a joining station (14),
wherein at least one face preparation unit (12) is arranged such that it is stationary and at least one of the surfaces that is to be joined is arranged such that it is movable for a relative movement in relation to one another, wherein the face preparation unit (12), comprising a heating blade (12a), applies heat to at least one of the material panels (10, 11) and starts to melt it and thus prepares the at least one surface to be joined for joining,
wherein the partially melted surfaces for joining are then bonded to one another by contact pressure in a substance-to-substance or force-locking bond,
wherein the face preparation unit (12) is guided in a direction normal to the direction in which the surface of the face (10c, 11c) of the at least one material panel (10, 11) extends,
wherein at least one longitudinal edge (10a) and/or transverse edge (10b) of a first material panel (10) is joined to at least one surface of a further material panel (11),
wherein the material panels are pressed by contact pressure arrangements, and wherein the face preparation unit (12) is guided in relation to the surfaces to be joined at an obtuse to right-angled angle of more than 45 degrees to the face (10c, 11c) of at least one material panel (10, 11),
**characterised in that** the at least one surface to be joined is prepared for joining during the relative movement,
**in that** the face preparation unit (12) is guided in a joining gap (13) in which a guiding blade (12b) is also arranged,
**in that** the guiding blade (12b) is associated with the heating blade (12a) that is in contact with the material panels, in a leading position in respect of the joining procedure, upstream of the heating blade as seen in the feeding direction of the material panels, and
**in that** the material panels are bonded in the joining station (14) with monitoring of the contact pressure by sensor.

2. A method according to Claim 1, **characterised in that** the guiding blade (12b) is thinner than the heating blade (12a).

3. A method according to Claim 1 or 2, **characterised in that** the face preparation unit (12) is guided in the joining gap (13), or is introducible into the joining gap, parallel to the surfaces that are to be joined.

4. A method according to one of the preceding claims, **characterised in that** the face preparation unit (12), as an application unit, applies a bonding agent to the surfaces to be joined for the purpose of bonding the surfaces.

5. A method according to one of the preceding claims, **characterised in that** the material panels (10, 11) are joined to one another to form corner joints.

6. A method according to one of the preceding claims, **characterised in that**, during joining, the material panels (10, 11) are guided and positioned at least against surfaces of the material panels (10, 11) other than the surfaces to be joined.

7. A method according to Claim 6, **characterised in that** the guiding or positioning of the material panels (10, 11) is at opposite surfaces of the material panels (10, 11) to the surfaces to be joined.

8. A method according to Claim 6 or 7, **characterised in that** the force during guiding or positioning of the material panels (10, 11) is controlled by open and/or closed-loop control.

9. A device for joining a plurality of material panels (10, 11) having a plurality of surfaces, wherein the surfaces of the material panels are formed by a plurality of mutually adjoining longitudinal edges (10a, 11a), transverse edges (10b, 11b) and faces (10c, 11c), wherein the faces adjoin the longitudinal edges (10a, 11a) and transverse edges (10b, 11b) and are of a larger surface area than the longitudinal edges and transverse edges,
wherein there is provided a joining station (14) in which at least one surface of a first material panel (10) that is to be joined is precisely positionable and joinable in relation to at least one surface of a further material panel (11),
wherein at least one face preparation unit (12) is provided for the purpose of preparing at least one of the surfaces to be joined,
wherein the face preparation unit (12) is arranged such that it is stationary and the at least one of the surfaces that are to be joined is arranged such that it is movable for a relative movement in relation to one another, wherein the face preparation unit (12), comprising a heating blade (12a), applies heat to at least one of the material panels (10, 11) and starts to melt it and thus prepares the at least one surface to be joined for joining,
wherein there are provided contact pressure arrangements (15) for subsequently pressing the surfaces to be joined by contact pressure for the purpose of achieving a substance-to-substance or force-locking bond,
wherein the face preparation unit (12) is guidable in a joining gap (13) in a direction normal to the direction in which the surface of the face (10c, 11c) of the at least one material panel (10, 11) extends,
wherein, in the joining station, at least one longitudinal edge (10a) and/or transverse edge (10b) of a first material panel (10) is joinable to at least one surface of a further material panel (11),
wherein the material panels are pressed by the contact pressure arrangements, wherein the face preparation unit (12) is arranged at an obtuse to right-angled angle of more than 45 degrees to the face (10c, 11c) of at least one material panel (10, 11),
**characterised in that** the at least one surface to be joined is prepared for joining during the relative movement,
**in that** there is associated with the heating blade (12a) that is in contact with the material panels a guiding blade (12b) that is in a leading position relative to the heating blade in the joining gap (13) during the joining procedure, upstream of the heating blade as seen in the feeding direction of the material panels, and **in that** force-detection devices (16) are provided in the joining station (14) for the purpose of monitoring the contact pressure.

10. A device according to Claim 9, **characterised in that** the guiding blade (12b) is thinner than the heating blade (12a).

11. A device according to Claim 9 or 10, **characterised in that** the face preparation unit (12) is arranged in the joining gap (13) parallel to the surfaces that are to be joined.

12. A device according to one of Claims 9 to 11, **characterised in that** the face preparation unit (12), as an application unit, takes a form for the purpose of applying a bonding agent to at least one of the surfaces to be joined for the purpose of bonding the surfaces.

13. A device according to one of Claims 9 to 12, **characterised in that** there is provided in the joining station (14) a positioning device (18) for precisely positioning the material panels (10, 11), which guides the material panels (10, 11) at the opposite surfaces to the surfaces to be joined.

14. A device according to Claim 9, **characterised in that** an open or closed-loop controller (17) is provided for controlling the force during guiding or positioning of the material panels (10, 11).

## Revendications

1. Procédé d'assemblage de plusieurs plaques de matériau (10, 11) ayant plusieurs surfaces, dans lequel les surfaces des plaques de matériau sont formées par plusieurs côtés longitudinaux (10a, 11a), côtés transversaux (10b, 11b) et faces (10c, 11c) adjacents, les faces étant adjacentes aux côtés longitudinaux (10a, 11a) et aux côtés transversaux (10b, 11b) et étant de plus grande surface que les côtés longitudinaux et les côtés transversaux,
dans lequel les plaques de matériau (10, 11) sont positionnées dans une station d'assemblage (14) de façon parfaitement ajustées les unes aux autres,
dans lequel au moins une unité de préparation de faces (12) est disposée de manière stationnaire et au moins une des surfaces à assembler de manière déplaçable, pour un déplacement relatif de l'une par rapport à l'autre, l'unité de préparation de faces (12) comprenant une lame chauffante (12a) appliquant de la chaleur à au moins l'une des plaques de matériau (10, 11) et la faisant fondre, pour préparer la ou les surface(s) à assembler pour l'assemblage,
dans lequel les surfaces fondues à assembler sont reliées ensuite ensemble par application de pression de serrage et liaison de matière ou adhésion,
dans lequel l'unité de préparation de faces (12) est guidée perpendiculaire à l'étendue de la face (10c, 11c) de la ou des plaque(s) de matériau (10, 11),
dans lequel au moins un côté longitudinal (10a) et/ou un côté transversal (10b) d'une première plaque de matériau (10) est assemblée avec au moins une surface d'une autre plaque de matériau (11),
dans lequel les plaques de matériau sont pressées par des moyens de pression, et
dans lequel l'unité de préparation de faces (12) est guidée avec un angle obtus à droit de plus de 45 degrés par rapport à la face (10c, 11c) d'au moins une plaque de matériau (10, 11), relativement aux surfaces à assembler,
**caractérisé en ce que** la ou les surface(s) à assembler est/sont préparée(s) pour l'assemblage pendant le déplacement relatif,
**en ce que** l'unité de préparation de faces (12) est guidée dans un espace d'assemblage (13), dans lequel une lame de guidage (12b) est également disposée,
**en ce que** la lame de guidage (12b) précédant, lors du processus d'assemblage dans la direction d'avancement des plaques de matériau, la lame chauffante (12a) est associée à la lame de chauffante (12a) entrant en contact avec les plaques de matériau et
**en ce que** les plaques de matériau sont reliées dans la station d'assemblage (14) sous la surveillance de la pression à l'aide de capteurs.

2. Procédé selon la revendication 1, **caractérisé en ce que** la lame de guidage (12b) est plus mince que la lame chauffante (12a).

3. Procédé selon la revendication 1 ou 2, **caractérisé en ce que** l'unité de préparation de faces (12) est guidée parallèlement aux surfaces à assembler dans l'espace d'assemblage (13) ou peut être introduite dans l'espace d'assemblage.

4. Procédé selon l'une des revendications précédentes, **caractérisé en ce que** l'unité de préparation de faces (12), en tant qu'unité d'application, applique sur les surfaces à assembler un moyen de liaison pour la liaison des surfaces.

5. Procédé selon l'une des revendications précédentes, **caractérisé en ce que** les plaques de matériau (10, 11) sont assemblées ensemble en formant des chocs angulaires.

6. Procédé selon l'une des revendications précédentes, **caractérisé en ce que** les plaques de matériau (10, 11) sont guidées et positionnées pendant l'assemblage au moins au niveau de surfaces des plaques de matériau (10, 11) qui sont différentes des surfaces à assembler.

7. Procédé selon la revendication 6, **caractérisé en ce que** le guidage ou le positionnement des plaques de matériau (10, 11) se produit au niveau des surfaces des plaques de matériau (10, 11) opposées aux surfaces à assembler.

8. Procédé selon la revendication 6 ou 7, **caractérisé en ce que** la force lors du guidage ou du positionnement des plaques de matériau (10, 11) est pilotée et/ou réglée.

9. Dispositif pour assembler plusieurs plaques de matériau (10, 11) ayant plusieurs surfaces, les surfaces des plaques de matériau étant formées par plusieurs côtés longitudinaux (10a, 11a), côtés transversaux (10b, 11b) et faces (10c, 11c) adjacents, les faces étant adjacentes aux côtés longitudinaux (10a, 11a) et aux côtés transversaux (10b, 11b) et étant de plus grande surface que les côtés longitudinaux et les côtés transversaux,
dans lequel une station d'assemblage (14) est prévue, dans laquelle au moins une surface à assembler d'une première plaque de matériau (10) est positionnable et assemblable de manière parfaitement ajustée avec au moins une surface d'une autre plaque de matériau (11),
dans lequel au moins une unité de préparation de faces (12) est prévue pour la préparation d'au moins l'une des surfaces à assembler,
dans lequel l'unité de préparation de faces (12) est stationnaire et la ou les surface(s) à assembler est/sont disposée(s) de manière déplaçable, pour un déplacement relatif de l'une par rapport à l'autre, l'unité de préparation de faces (12) comprenant une lame chauffante (12a) appliquant de la chaleur à au moins l'une des plaques de matériau (10, 11) et la faisant fondre, pour que la ou les surface(s) à assembler soi(en)t prête(s) pour l'assemblage,
dans lequel des moyens de pression (15) sont prévus pour presser ensuite les surfaces à assembler avec une pression pour l'obtention d'une liaison par matière ou adhésion,
dans lequel l'unité de préparation de faces (12) peut être guidée perpendiculairement à l'étendue des faces (10c, 11c) de la ou des plaque(s) de matériau (10, 11) dans un espace d'assemblage (13),
dans lequel dans la station d'assemblage, au moins un côté longitudinal (10a) et/ou un côté transversal (10b) d'une première plaque de matériau (10) peu(ven)t être assemblé(s) avec au moins une surface d'une autre plaque de matériau (11),
dans lequel les plaques de matériau sont pressées par les moyens de pression,
dans lequel l'unité de préparation de faces (12) est disposée avec un angle obtus à droit de plus de 45 degrés par rapport à la face (10c, 11c) d'au moins d'une plaque de matériau (10, 11),
**caractérisé en ce que** la ou les surface(s) à assembler est/sont préparée(s) pour l'assemblage pendant le déplacement relatif,
**en ce qu'**une lame de guidage (12b) précédant, lors le processus d'assemblage, la lame de chauffage dans l'espace d'assemblage (13) dans la direction d'avancement des plaques de matériau avant la lame chauffante, est associée à la lame chauffante (12a) entrant en contact avec les plaques de matériau,
**en ce que** dans la station d'assemblage (14) sont prévus des moyens de mesure de force (16) pour surveiller la pression de serrage.

10. Dispositif selon la revendication 9, **caractérisé en ce que** la lame de guidage (12b) est plus mince que la lame chauffante (12a).

11. Dispositif selon la revendication 9 ou 10, **caractérisé en ce que** l'unité de préparation de faces (12) est disposée parallèlement aux surfaces à assembler dans l'espace d'assemblage (13).

12. Dispositif selon l'une des revendications 9 à 11, **caractérisé en ce que** l'unité de préparation de faces (12) est formée en tant qu'unité d'application pour l'application d'un moyen de liaison pour lier les surfaces, sur au moins l'une des surfaces à assembler.

13. Dispositif selon l'une des revendications 9 à 12, **caractérisé en ce qu'**un système de positionnement (16) est prévu pour le positionnement parfaitement ajusté des plaques de matériau (10, 11) dans la station d'assemblage (14) et guide les plaques de matériau (10, 11) au niveau des surfaces opposées aux surfaces à assembler.

14. Dispositif selon la revendication 9, **caractérisé en ce qu'**un système de pilotage ou de réglage (17) est prévu pour le pilotage ou le réglage de la force lors du guidage ou du positionnement des plaques de matériau (10, 11).
